(19) Europäisches Patentamt / European Patent Office / Office européen des brevets

(11) **EP 4 193 121 B1**

(12) **EUROPÄISCHE PATENTSCHRIFT**

(45) Veröffentlichungstag und Bekanntmachung des Hinweises auf die Patenterteilung:
**01.05.2024 Patentblatt 2024/18**

(21) Anmeldenummer: **21758598.3**

(22) Anmeldetag: **04.08.2021**

(51) Internationale Patentklassifikation (IPC):
**G01B 11/06** *(2006.01)* **G01B 11/02** *(2006.01)*
**G01B 15/02** *(2006.01)* **G01N 21/3586** *(2014.01)*
**G01N 21/93** *(2006.01)* **G01N 21/27** *(2006.01)*
**G01N 21/954** *(2006.01)*

(52) Gemeinsame Patentklassifikation (CPC):
**G01B 11/0691; G01B 11/028; G01B 11/06; G01B 15/02; G01N 21/274; G01N 21/3586; G01N 21/93; G01N 21/954**

(86) Internationale Anmeldenummer:
**PCT/DE2021/100669**

(87) Internationale Veröffentlichungsnummer:
**WO 2022/028655 (10.02.2022 Gazette 2022/06)**

(54) **THZ-MESSVERFAHREN SOWIE THZ-MESSVORRICHTUNG ZUM VERMESSEN EINES MESSOBJEKTES**

THZ MEASUREMENT METHOD AND THZ MEASUREMENT DEVICE FOR MEASURING A MEASUREMENT OBJECT

PROCÉDÉ DE MESURE THZ ET DISPOSITIF DE MESURE THZ POUR MESURER UN OBJET DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2020 DE 102020120547**

(43) Veröffentlichungstag der Anmeldung:
**14.06.2023 Patentblatt 2023/24**

(73) Patentinhaber: **CiTEX Holding GmbH**
**49324 Melle (DE)**

(72) Erfinder:
• **THIEL, Marius**
**49090 Osnabrück (DE)**
• **KLOSE, Ralph**
**49324 Melle (DE)**

(74) Vertreter: **Bremer, Ulrich**
**Advopat**
**Patent- und Rechtsanwälte**
**Theaterstraße 6**
**30159 Hannover (DE)**

(56) Entgegenhaltungen:
EP-A1- 3 524 930    DE-A1-102017 125 753
DE-U1-202016 008 526    US-A1- 2010 280 779
US-A1- 2013 204 577

## Beschreibung

Die Erfindung betrifft ein THz-Messverfahren sowie eine THz-Messvorrichtung zum Vermessen eines Messobjektes, insbesondere zur Ermittlung von Schichtdicken des Messobjektes.

Bei der THz-Messung von Schichtdicken von Messobjekten wird ein THz-Sendestrahl entlang einer optischen Achse von einem THz-Transceiver durch ein Messobjekt ausgesandt. Insbesondere Messobjekte aus Kunststoff und Gummi, aber auch z. B. Papier- oder Keramik-Materialien sind grundsätzlich für THz-Strahlung durchlässig und weisen einen Brechungsindex n auf, der sich deutlich von dem Brechungsindex n0=1 in Vakuum bzw. Luft unterscheidet. Somit wird beim Durchtritt des THz-Sendestrahls durch die Grenzflächen der Messobjekte jeweils ein Teil-Reflexionsstrahl reflektiert, der im Allgemeinen die Intensität bzw. Strahlungsleistung des THz-Sendestrahls nicht relevant schwächt, so dass der THz-Sendestrahl mehrere derartige Grenzflächen hintereinander durchqueren kann. Die reflektierten Teil-Reflexionsstrahlen können vom THz-Transceiver wieder detektiert werden, so dass eine Signalamplitude gebildet wird, bei der Messpeaks zu verschiedenen Zeitpunkten aufgenommen werden. Eine derartige Messung kann als direkte Laufzeitmessung, als Frequenzmodulation oder mit gepulster THz-Strahlung durchgeführt werden.

Die Vermessungen können insbesondere in einem Endlos-Verfahren erfolgen, bei dem ein Messobjekt kontinuierlich durch den Messraum geführt wird und seine zu vermessenden Grenzflächen in erster Linie senkrecht zur optischen Achse stehen. So können insbesondere Schläuche und Profile nach ihrer Herstellung direkt vermessen werden.

Aus der ermittelten Signalamplitude können Messungen der Wanddicken und von Innenvolumina, z. B. dem Innendurchmesser eines Schlauches oder Profils durchgeführt werden.

Es zeigt sich jedoch, dass bei einigen Messungen keine direkte Ermittlung des Reflexionspeaks beim Durchtritt durch die jeweilige Grenzfläche möglich ist, da die Grenzfläche nicht senkrecht zur optischen Achse des THz-Sendestrahls steht. Dies kann insbesondere bei Sagging-Effekten an extrudierten Messobjekten, insbesondere Rohren auftreten. Hier kann das noch warme, zuvor extrudierte Material, insbesondere Kunststoff oder Gummi, an den Wandbereichen herunterlaufen und somit insbesondere eine Innenfläche bilden, die nicht-senkrecht zur optischen Achse steht. Ein derartiges Sagging ist grundsätzlich zulässig, wenn hierdurch der Innendurchmesser nicht zu sehr verringert wird und die Wandbereiche nicht zu sehr ausgedünnt werden.

Weiterhin können auch z. B. Profile vermessen werden, die unterschiedliche Grenzflächen aufweisen, die nicht sämtlich senkrecht zur optischen Achse ausgerichtet werden können.

Somit werden oftmals THz-Messvorrichtungen eingesetzt, die eine Vielzahl von um den Messraum herum positionierten THz-Messvorrichtungen aufweisen, um gegebenenfalls schrägstehende Grenzflächen erfassen zu können. Auch dies ist jedoch nicht immer möglich und zudem aufwändig.

Die DE 20 2016 008 526 U1 beschreibt eine Vorrichtung zum Messen eines Durchmessers und/oder einer Wanddicke eines Strangs, mit einem THz-Sender und THz-Empfänger, sowie einem hinter dem Strang angeordneten Reflektor. Eine Auswerteeinrichtung ermittelt anhand empfangener Messsignale den Durchmesser und/oder die Wanddicke.

Die DE 10 2018 124 175 A1 beschreibt ein Verfahren zum Steuern einer Produktionsanlage für plattenförmige oder strangförmige Körper mittels Messstrahlung im Gigahertz- oder Terahertzfrequenzbereich, wobei ein Brechungsindex des Körpers und/oder eine Absorption der Messtrahlung im Körper ermittelt wird, um die Produktionsanlage zu steuern.

US 2013/204577 A1 beschreibt ein analytisches Modell, das den Verlauf von Strahlung durch ein beschichtetes kontinuierliches Netz beschreibt, wobei eine Schichtdicke und ein Brechungsindex als Variablen die Geschwindigkeit und Richtung der Strahlung bestimmen. Das Modell ermittelt hierbei Eigenschaften der ausgesandten Strahlung auf Basis von Eigenschaften der einfallenden Strahlung und anfänglich vorgegebenen Werten der Schichtdicke.

EP 3 524 930 A1 beschreibt eine Prüfeinrichtung, ein Prüfverfahren, ein Computerprogramm und ein Speichermedium, wobei von einer Strahlungseinrichtung eine Probe, die eine Vielzahl von aufeinander folgenden Schichten aufweist, mit THz-Wellen bestrahlt wird und von der Probe ausgegebene THz-Strahlung detektiert wird, um eine detektierte Wellenform zu erzeugen, wobei in einer Einschätzeinrichtung eine Position der ersten Grenzfläche auf Basis einer Impulswelle einer zweiten Grenzfläche und hinterlegten Werten ermittelt wird.

US 2010/280779 A1 beschreibt ein System und ein Verfahren zum Messen von Laufzeit-Positionen von Pulsen in Zeitdomän-Daten mit hoher Präzision. Beispieldaten sind die Durchlaufzeit von Pulsen in Zeitdomän-THz (TD-THz)-Daten. Die Präzision der Puls-Zeitgebung beeinflusst direkt die Präzision der Messung von Probeneigenschaften.

Die DE 10 2017 125753 A1 beschreibt ein THz-Messverfahren und eine THz-Messvorrichtung zum Messen mindestens einer Wanddicke eines rohrförmigen Messobjektes, bei dem ein THz-Haupt-Sensor einen THz-Hauptstrahl entlang einer ersten optischen Achse durch eine Symmetrieachse des Messobjektes ausgibt und von der Außenfläche und Innenfläche reflektierte THz-Strahlung empfängt, wobei ein THz-Zusatz-Sensor zum Aussenden eines THz-Zusatz-Strahls entlang einer gegenüber der ersten Achse des Haupt-Sensors verstellten zweiten optischen Achse vorgesehen ist und den reflektierten THz-Zusatz-Strahl detektiert. Hierbei wird eine innere Wanddicken-Verformung aus den Signalamplituden des THz-Hauptstrahls und des THz-Zusatzstrahls ermittelt.

Der Erfindung liegt die Aufgabe zugrunde, ein THz-Messverfahren und eine THz-Messvorrichtung zu schaffen, die eine sichere Ermittlung auch bei nicht-detektierbaren oder gegebenenfalls schrägstehenden Grenzflächen ermöglichen.

Diese Aufgabe wird durch ein THz-Messverfahren und eine THz-Messvorrichtung nach den unabhängigen Ansprüchen gelöst. Die Unteransprüche beschreiben bevorzugte Weiterbildungen.

Die erfindungsgemäße THz-Messvorrichtung kann insbesondere unter Einsatz des erfindungsgemäßen THz-Messverfahrens, d. h. insbesondere zu dessen Durchführung, eingesetzt werden. Das erfindungsgemäße THz-Messverfahren kann insbesondere unter Verwendung der erfindungsgemäßen THz-Messvorrichtung durchgeführt werden.

Der THz-Sendestrahl kann insbesondere im Frequenzbereich von 10 GHz bis 10 THz, insbesondere 50 GHz bis 8 THz, z.B. 50 ober 80 GHz bis 3 oder 5 THz ausgegeben und entsprechend detektiert werden. Er kann somit auch im Bereich der Radarstrahlung oder Mikrowellenstrahlung liegen.

Der THz-Transceiver kann den THz-Sendestrahl durch direkte Laufzeitmessung, frequenzmoduliert und/oder als gepulste Strahlung ausgeben und detektieren, wobei der THz-Transceiver insbesondere vollelektronisch ausgebildet sein kann.

Die Messobjekte können insbesondere aus einem Kunststoffmaterial oder Gummi, aber weiterhin auch aus Papier, Glas oder Keramik ausgebildet sein.

Der Erfindung liegt der Gedanke zugrunde, vorab eine Kalibrierung oder Leermessung an einem hinter dem Messraum vorgesehenen Hauptreflektor (auch Teilreflektor), insbesondere Total-Reflektor oder Spiegel, durchzuführen, um die Laufzeit des leeren Messraums festzustellen, und nachfolgende Messungen, d.h. Objektvermessungen, hiermit vergleichen zu können. Somit wird zunächst eine Kalibriermessung durch den leeren, d. h. insbesondere mit Luft gefüllten Messraum durchgeführt und ein Kalibrierungs-Zeitpunkt des Hauptreflexionspeaks ermittelt.

Bei einer nachfolgenden Objektvermessung werden Teilreflektionspeaks der Grenzflächen ermittelt und Schichtdicken entlang der optischen Achse, d.h. Wandbereiche oder Luftschichten, als Zeitdifferenzen zwischen den Teilreflektionspeaks erkannt. Wenn die Teilreflektionspeaks einer oder zweier Grenzflächen fehlen, kann grundsätzlich eine Schrägstellung vorliegen oder auch eine entsprechende Oberflächenrauheit. Somit kann die Schichtdicke einer Materialschicht bzw. eine Wanddicke nicht direkt ermittelt werden, es wird jedoch die Laufzeit bis zum Hauptreflexionspeak ermittelt und mit der Kalibriermessung verglichen, um die Gesamt- Zeitverzögerung des THz-Sendestrahls bis zu dem Hauptreflektor zu ermitteln.

Diese Gesamt-Verzögerung des Totalreflexionspeaks in der Signalamplitude gegenüber der Kalibriermessung entspricht der Gesamt-Verzögerung des THz-Sendestrahls durch das Material des Messobjektes, d. h. der Summe der Wanddicken (bzw. mit dem Material gefüllten Schichtdicken). Somit kann ein Gleichungssystem aufgestellt werden, aus dem eine nicht direkt ermittelbare Schichtdicke ermittelt werden kann, da in dem Gleichungssystem die Zusatz-Information der Gesamt-Verzögerung durch das Material vorliegt, so dass lediglich ein Parameter fehlt und somit eine fehlende Schichtdicke ermittelbar ist.

Somit kann insbesondere z. B. ein Rohr oder entsprechendes Messobjekt vermessen werden, bei dem an der Innenfläche einer Wand Effekte wie Sagging auftreten. Somit kann insbesondere das Sagging abgeschätzt werden und es kann ermittelt werden, ob das Sagging in einem zulässigen Bereich liegt, so dass trotz des Fehlens der inneren Grenzfläche eines der Wandbereiche ein zulässiges Messobjekt vorliegt.

Weiterhin können jedoch auch Messobjekte vermessen werden, die Stege oder Bereiche aufweisen, die zwei nicht-detektierbare Grenzflächen aufweisen, d.h. Grenzflächen, die nicht-senkrecht zur optischen Achse stehen. Dies kann z. B. ein mehrkammeriges Profil mit einer schräg stehenden inneren Lamelle oder einem inneren Steg sein, der den Innenraum unterteilt. Weiterhin kann auch ein allein stehendes, schräges Profil bzw. eine schräge Platte entsprechend vermessen werden. In derartigen Fällen wird somit die Gesamtverzögerung des Hauptreflexionspeaks direkt der geometrischen Schichtdicke des Materials zugeordnet.

Nach der Ermittlung einer Schichtdicke einer schräg stehenden Wand kann eine weitere Auswertung erfolgen, bei der der Winkel der Grenzfläche gegenüber der optischen Achse herangezogen wird und z. B. bei internen Lamellen oder Stegen somit unter Berücksichtigung der Projektion (Sinus oder Cosinus) die geometrische Schichtdicke des Stegs oder der Lamelle ermittelt wird.

Weiterhin unterscheiden sich z.B. bei direkten Laufzeitmessungen die Messpeaks eines Strahl-Eintritts in das Material von dem Messpeaks eines Strahl-Austritts aus dem Material, insbesondere mit entgegengesetzten Amplitudenverläufen. Somit kann diese weitere Information eines Eintritts-Peaks oder Austritts-Peaks zur Verifizierung herangezogen werden, welche Grenzfläche in der Signalamplitude fehlt.

Weiterhin kann gemäß einer bevorzugten Ausbildung das Messobjekt in einem Endlos-Verfahren vermessen werden, d. h. fortlaufend durch den Messraum geführt werden, insbesondere entlang einer Förderrichtung senkrecht zur optischen Achse, so dass fortlaufend Objektvermessungen durchgeführt und miteinander verglichen werden, so dass bei Wegfall eines Messpeaks, z. B. einer Innenfläche, auf eine entsprechende Änderung dieser Grenzfläche geschlossen werden kann. So kann z. B. das Auftreten von Sagging erkannt werden. Somit können insbesondere zunächst bei ordnungsgemäßen Messungen aus dem Messsignal die Grenzflächen eindeutig zugeordnet werden, und nachfolgend bei Wegfall eines Messpeaks aus dem Vergleich mit vorherigen Messungen erkannt werden, welcher Messpeak wegfällt und welche Grenzfläche somit betroffen ist, so dass hier direkt die relevante Schichtdicke aus dem erfindungsgemäßen Messverfahren nachfolgend ermittelbar ist.

Gemäß einer bevorzugten Ausbildung weist das Messobjekt ein einheitliches Material bzw. Material mit einheitlichem Brechungsindex auf. Somit kann bei der Ermittlung ein einheitlicher Brechungsindex des Materials angesetzt werden, der z.B. auch individuell bekannt sein kann.

Der Brechungsindex kann hierbei zum einen bekannt sein und z.B. vom Benutzer händisch eingegeben werden.

Bei Vermessung von einigen Messobjekten ist jedoch zunächst der Brechungsindex des Materials nicht oder nicht genau bekannt. So kann der Brechungsindex des Materials unbekannt sein oder sich ändern, wenn z.B. unterschiedliche Ausgangsmaterialien eingesetzt und gemischt werden, z.B. bei Extrusion von Kunststoffobjekten oder Gummiobjekten. Entsprechend den Mischungsverhältnissen kann der Brechungsindex des Messobjektes nachfolgend variieren, so dass das Mischungsverhältnis unbekannt sein kann und eine direkte Ermittlung von Materialdicken aufgrund des unbekannten Brechungsindex nicht möglich ist.

Gemäß einer besonders bevorzugten Ausbildung kann der Brechungsindex daher auch vorab ermittelt werden.

Hierzu ist vorgesehen, dass zunächst eine Leermessung oder Kalibriermessung erfolgt, bei der der THz-Transceiver den leeren Messraum vermisst, an dessen Ende der Hauptreflektor, d.h. insbesondere ein Spiegel, zur Reflexion des THz-Sendestrahls angeordnet ist. Der THz-Transceiver gibt somit den THz-Sendestrahl durch den Messraum aus und detektiert einen Kalilbrier-Hauptreflexionspeak des Hauptreflektors zu einem Kalibrierungs-Zeitpunkt.

Nach der Kalibriermessung erfolgt ohne Veränderung der Messvorrichtung, d.h. auch ohne Verstellung des Hauptreflektors, die Objektmessung, bei der das Messobjekt in den Messraum eingebracht wird, wobei es z. B. kontinuierlich durch den Messraum geführt werden kann.

Bei der Objektmessung werden ein Mess-Hauptreflexionspeak des Hauptreflektors und Messpeaks (Teil-Reflektionspeaks) der Grenzflächen ermittelt.

Erfindungsgemäß wird erkannt, dass eine Zeitdifferenz zwischen den Hauptreflektionen der Kalibriermessung und der Objektmessung verglichen werden kann mit der Gesamt-Zeitverzögerung, die sich aus der Summe der Wandlaufzeiten, d.h. der Laufzeiten bzw. Laufzeitverzögerungen in den Materialbereichen ergibt, wobei die Laufzeiten in den Materialbereichen durch die Messpeaks (Teilreflektions-Peaks) bestimmt sind.

Somit kann aus der Differenz der Reflektionszeitpunkte des Hauptreflektors in der Kalibriermessung und der Objektmessung eine Verzögerung des Hauptreflektionspeaks ermittelt werden,
die der Summe der zeitlichen Verzögerungen der Wandlaufzeiten gegenüber den entsprechenden Laufzeiten in Luft oder Vakuum entspricht.

Sowohl die Verzögerung des Hauptreflektionspeaks als auch die zeitliche Verzögerung der Summe der Wandlaufzeiten hängen wiederum vom Brechungsindex und der Summe der geometrischen Wanddicken ab.

Somit kann eine Gleichung aufgestellt werden, in der der Brechungsindex und die ermittelten Zeitpunkte der Messpeaks der beiden Messungen auftreten, so dass hieraus der Brechungsindex ermittelt werden kann.

Das Messobjekt kann kontinuierlich durch den Messraum geführt werden, z.B. ein Rohr mit vorderem und hinteren Wandbereich, insbesondere mit seiner Symmetrieachse senkrecht durch die optische Achse, und kontinuierlich der Brechungsindex des Materials des Messobjektes ermittelt werden, wenn bzw. solange die Messpeaks der Grenzflächen detektiert werden können.

In dem Fall, dass bei der Ermittlung des Brechungsindex zeitliche Änderungen ermittelt werden, können Fehlersignale und/oder Korrektursignale ausgegeben werden, und/oder es kann eine Regelung einer Zuführung von z.B. zwei unterschiedlichen Ausgangsmaterialien mit unterschiedlichem, an sich bekanntem Brechungsindex durchgeführt werden.

Somit ermöglicht die Erfindung eine komplexe und flexible Ermittlung bei Vorliegen unterschiedlicher Zustände, insbesondere auch flexibel in Abhängigkeit der Messungen. So können folgende Schritte erfolgen:

- zunächst die Kalibriermessung,
- im Fall des Vorliegens sämtlicher Messpeaks der optionale Schritt einer Bestimmung des Brechungsindex des Materials des Messobjektes,
- im Fall des Vorliegens sämtlicher Messpeaks eine Bestimmung der geometrischen Schichtdicken,
- im Fall des Fehlens eines oder mehrerer Messpeaks ein Schritt der Ermittlung der Schichtdicken aus einem Vergleich der Differenzen der Zeitpunkte der Messpeaks mit der Gesamt- Zeitverzögerung.

Diese Schritte können erfindungsgemäß auch fortlaufend bzw. wiederholt ausgeführt werden. So kann z.B. bei Vorliegen sämtlicher Messpeaks fortlaufend die Bestimmung des Brechungsindex und/oder eine Bestimmung der Schichtdicken erfolgen, wenn dann z.B. ein Messpeak wegfällt, z.B. bei Sagging, kann der erfindungsgemäße Schritt der Ermittlung der Schichtdicken bei einem fehlenden Messpeak durchgeführt werden.

Grundsätzlich kann der Brechungsindex vom Benutzer aber auch eingegeben werden, dies ist insbesondere vorteilhaft, wenn der Fall des Fehlens eines oder mehrere Messpeaks vorliegt, ohne dass vorher eine Ermittlung des Brechungsindex möglich war.

Die erfindungsgemäße THz-Messvorrichtung weist insbesondere den THz-Transceiver, den Messraum und den hinter dem Messraum vorgesehenen Hauptreflektor, sowie eine Steuer- und Auswerteeinrichtung zur Auswertung der Signalamplitude auf, wobei der THz-Transceiver mit der Steuer- und Auswerteeinrichtung in einer Baueinheit integriert sein kann. Der Hauptreflektor kann insbesondere ein Spiegel, d.h. Totalreflektor sein, aber es sind auch Ausführungsformen z.B. mit halbdurchlässigen Spiegeln als Hauptreflektor möglich, bei denen somit ein Teil-Strahl durchgelassen wird und in der Signalamplitude somit weitere, auszuwertende Messungen folgen.

Die Erfindung wird im Folgenden anhand der beiliegenden Zeichnungen an einigen Ausführungsformen näher erläutert. Es zeigen:

Fig. 1    eine Messvorrichtung bei einer Kalibriermessung oder Leermessung mit der Signalamplitude, zur Kalibrierung der nachfolgenden Objektvermessungen;

Fig. 2    eine Vermessung eines Zylinderrohrs als Messobjekt, mit Signalamplitude;

Fig. 3    eine Vermessung eines Zylinderrohrs mit Sagging, mit Signalamplitude;

Fig. 4    eine Vermessung eines mehrkammerigen Profils, mit Signalamplitude;

Fig. 5    eine Vermessung eines schräg stehenden Bandes, mit Signalamplitude.

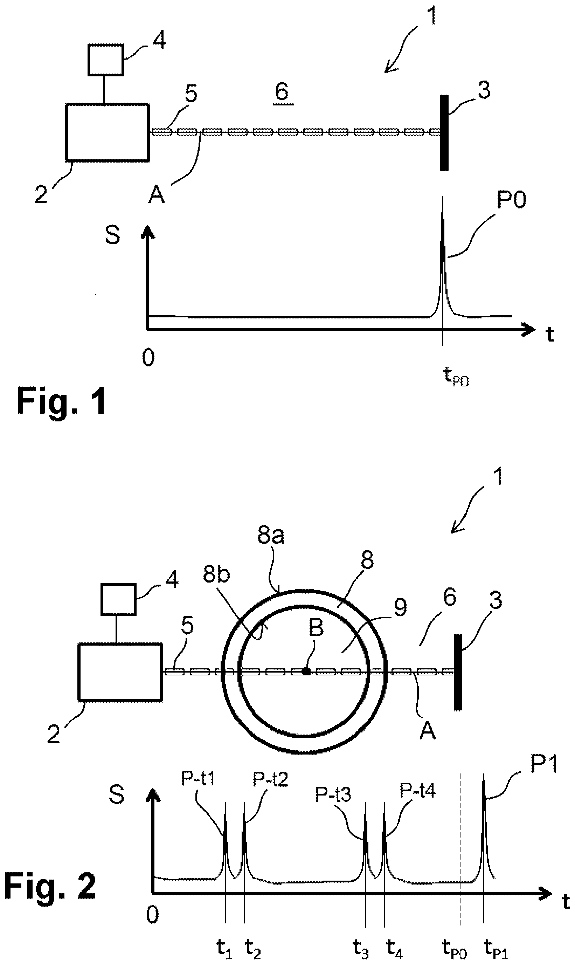

Gemäß Figur 1 weist eine THz-Messvorrichtung 1 einen THz-Transceiver 2, einen Spiegel 3 und eine Steuer- und Auswerteeinrichtung 4 auf. Der THz-Transceiver 2 sendet einen THz-Sendestrahl 5 entlang einer optischen Achse A durch einen Messraum 6, der zur Aufnahme unterschiedlicher Messobjekte zwischen dem THz-Transceiver 2 und dem Spiegel 3 vorgesehen ist. Der Spiegel 3 ist senkrecht zur optischen Achse A ausgerichtet, so dass bei der in Figur 1 gezeigten Leermessung der THz-Sendestrahl 5 entlang der optischen Achse A zurück zu dem THz-Transceiver 2 gespiegelt und dort detektiert wird.

Der THz-Transceiver 2 kann insbesondere vollelektronisch ausgebildet sein und somit einen Sende- und Empfangsdipol aufweisen. Die THz-Messung kann auf einer direkten Laufzeitmessung basieren; weiterhin ist auch eine Frequenzmodulation möglich, und/oder der Einsatz gepulster THz-Strahlung. Der THz-Sendestrahl 5 kann insbesondere im Frequenzbereich von 10 GHz bis 10 THz, insbesondere 5 GHz bis 8 THz, ausgesendet werden, d. h. er kann Terahertz-Strahlung, Mikrowellen-Strahlung und/oder Radar-Strahlung entsprechen.

In Schritt St1 der Leermessung der Figur 1 durchquert der THz-Sendestrahl 5 somit den leeren Messraum 6, d. h. mit lediglich Luft als Medium, in dem die Lichtgeschwindigkeit $c_0$ im Wesentlichen der Vakuum-Geschwindigkeit entspricht. In der in Figur 1 gezeigten Signalamplitude S, die in ihrem zeitlichen Verlauf, d. h. gegenüber der Zeit t, aufgetragen ist, wird somit zum Zeitpunkt $tP_0$ ein Totalreflexionspeak $P_0$ der am Spiegel 3 ermittelt.

Nach dem ersten Verfahrensschritt St1 der Kalibriermessung ist somit der Zeitpunkt $tP_0$ des Kalibrierungs-Hauptrekflektionspeaks $P_0$ festgelegt bzw. einkalibriert. Diese Anordnung wird nachfolgend nicht geändert.

Auf die Kalibriermessung der Figur 1 folgt in Schritt St2 ohne Verstellung der Elemente 2, 3 eine Objektvermessung eines ersten Messobjektes 8, hier eines einschichtigen, symmetrischen Zylinderrohrs 8, das z. B. entlang seiner Symmetrieachse B senkrecht zur optischen Achse A durch den Messraum 6 geführt wird und eine Außenfläche 8a sowie eine Innenfläche 8b aufweist. Das Messobjekt 8 ist aus einem für den Sendestrahl 5 bzw. die THz-Strahlung durchlässigen Material, insbesondere Kunststoff, Gummi, aber auch z. B. Keramik oder Papier, ausgebildet, mit einem Brechungsindex $n1 \neq 1$ für den THz-Sendestrahl 5. Somit findet beim Durchqueren der Grenzflächen 8a und 8b jeweils eine Teilreflexion des THz-Sendestrahls 5 statt, zu der gemäß der Signalamplitude S der Figur 2 jeweils zu den Zeiten t1, t2, t3 und t4 Messpeaks (Teil-Reflexionspeaks) P-t1, P-t2, P-t3, P-t4 ermittelt werden. Da das als Messobjekt dienende Zylinderrohr 8 hier symmetrisch mit seiner Symmetrieachse B durch die optische Achse A geführt wird, können somit hier vier Messpeaks aufgenommen werden, d. h. beim Eintritt in die Außenfläche 8a, Austritt aus der Innenfläche 8b, nachfolgend nach Durchqueren des Innendurchmessers D1 des Innenraums 9i des Rohres 8, dann wiederum beim Eintritt in die Innenfläche 8b und nachfolgend dem Austritt aus der Außenfläche 8a in den Messraum 6 bzw. Außenraum. Nachfolgend gelangt der THz-Sendestrahl 5 zum Zeitpunkt $tP_1$ an den Spiegel 3 und wird dort reflektiert, so dass entsprechend der Messpeak P-t1 aufgenommen wird. Da die Teilreflexion jeweils nur einen Anteil an der Intensität von z. B. 2 bis 5 % des ein- bzw. ausfallenden Strahls ausmachen, sind Mehrfachreflexionen an den Grenzflächen 8a, 8b für die Messung nicht relevant.

In Figur 2 ist zusätzlich zu dem Zeitpunkt $tP_1$ des Totalreflexionspeaks am Spiegel 3 auch der Zeitpunkt $tP_0$ aus Figur 1 eingezeichnet, der somit dem Zeitpunkt der Leermessung der Figur 1 entspricht. Wie aus Figur 2 zu entnehmen ist, ist hier der aktuelle Messpeak P1 der Totalreflexion gegenüber dem Zeitpunkt tP0 der Kalibriermessung bzw. Leermessung aus Figur 1 zeitlich verzögert, da der THz-Sendestrahl 5 zwischen den Zeitpunkten t1 und t2 sowie zwischen den Zeitpunkten t3 und t4 durch das Material des Messobjektes 8 getreten ist und aufgrund der niedrigeren Lichtgeschwindigkeit C1, mit n1 = C0/C1, in diesen beiden Zeiträumen langsamer war. Hierbei liegt z. B. bei Kunststoffen der Brechungsindex n1 bei 1,5, so dass eine signifikante zeitliche Verzögerung auftritt und entsprechend die zeitlichen Verzögerungen des Totalreflexionspeaks messbar sind.

Die zeitliche Verzögerung tP1-tP0 kann somit auf diese zeitliche Verzögerung in den Bereichen zwischen den Zeitpunkten t1 und t2 sowie den Zeitpunkten t3 und t4 durch das Material des Zylinderrohrs 8 zurückgeführt werden, wobei hier angesetzt werden kann, dass der Brechungsindex n1 in diesen Zeitbereichen konstant bzw. einheitlich ist.

In Fig. 2 kann folgendes Gleichungssystem GL2 angesetzt werden, bei der WTij die Schichtdicke bzw. Breite zwischen den Grenzflächen der Messpeaks zu den Zeitpunkten ti und tj angibt, d.h. mit der vorderen Wandbreite WT12 , hinteren Wandbreite WT34, dem Innendurchmesser ID= WT23 und dem Außendurchmesser OD als Summer dieser drei Schichtdicken, d.h.

GL2:

$$WT_{12} = (t_2 - t_1) \cdot C_0 \,/\, 2\,n_1$$

$$ID = WT_{23} = (t_3 - t_2) \cdot C_0 \,/\, 2\,n_0$$

$$WT_{34} = (t_4 - t_3) \cdot C_0 \,/\, 2\,n_1$$

$$OD = WT_{12} + WT_{23} + WT_{34}$$

Somit kann aus dieser Objektvermessung nachfolgend in einem Schritt St3 einer ordnungsgemäßen Objektvermessung eine Ermittlung der Schichtdicken WTij, d.h. $WT_{12}$, $WT_{23}$, $WT_{34}$ und somit auch von OD erfolgen.

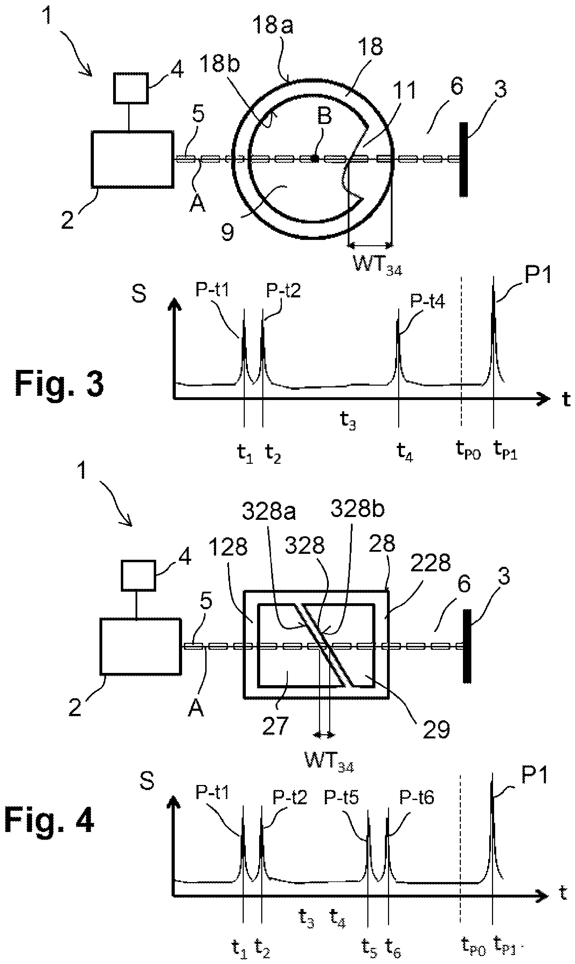

Figur 3 zeigt eine Ausführungsform, bei der nach der Kalibriermessung der Figur 1 als Messobjekt ein Zylinderrohr 18 durch den Messraum 6 geführt wird. Das Zylinderrohr 18 kann grundsätzlich dem Zylinderrohr 8 der Figur 2 entsprechen: es weist aber an seiner Innenfläche 18b einen Sagging-Bereich 11 auf. Ein derartiges Sagging kann insbesondere bei der Extrusion von Rohren aus Kunststoff oder Gummi auftreten, wenn das noch warme Material Schwerkraft-bedingt an den Flächen, insbesondere an der Innenfläche 8 herunterläuft. Grundsätzlich sind derartige Saggingbereiche 11 im gewissen Ausmaß zulässig, solange sie nicht zu stark sind bzw. zu weiteren nachteilhaften Effekten führen. So kann z.B. als Bewertungskriterium die Dicke des Saggingbereichs 11 bzw. der verbleibende Innendurchmesser Di des Zylinderrohrs 18 in diesem Bereich herangezogen werden, und entsprechend eine Verringerung der Wanddicke in anderen Bereichen.

Gemäß der Signalamplitude S der Figur 3 werden wiederum in der Objektvermessung des Schrittes St2 in der ersten Hälfte des Zylinderrohrs 18 zu den Zeitpunkten t1 und t2 die ordnungsgemäßen Messpeaks gemäß Figur 2 ermittelt; nachfolgend wird bei einem entsprechenden Zeitpunkt t3 kein Messpeak (Reflexionspeak) ermittelt, da die Innenfläche 11a des Saggingbereichs 11 hier nicht-senkrecht zur optischen Achse A steht und somit der THz-Sendestrahl 5 aus der optischen Achse A herausreflektiert wird. Nachfolgend wird zum Zeitpunkt t4 wiederum der ordnungsgemäße Messpeak beim Austreten des THz-Sendestrahls 5 aus der Außenfläche 8a des Zylinderrohrs 18 ermittelt, und nachfolgend zum Zeitpunkt tp1 der Totalreflexionspeaks am Spiegel 3.

Die Breite WT34 ist somit aus der Signalamplitude S (t) nicht direkt ermittelbar und wird in einem

- Schritt St4 einer Ermittlung der Schichtdicke bei fehlendem Messpeak durch das Gleichungssystem GL3 mit den einzelnen Gleichungen GL3a, GL3b, GL3c ermittelt:

GL3:
GL3a:

$$t_{P1} - t_{P0} = (t_2 - t_1) \cdot (n_1 - n_0) + (t_4 - t_3) \cdot (n_1 - n_0)$$

GL3b:

$$(t_4 - t_3) = (\, (\, t_{P1} - t_{P0}) \,/\, (n_1 - n_0)\, )\, - (t_2 - t_1)$$

GL3c:

$$WT_{34} = (t_4 - t_3) \cdot C_0 \,/\, 2\, n_1$$

$$= (\, (\, (\, t_{P1} - t_{P0}\, ) \,/\, (n_1 - n_0)\, )\, - (t_2 - t_1)\, )\, \cdot C_0 \,/\, 2\, n_1$$

Hierbei wird in GL3a die zeitliche Gesamtverzögerung aus einem Vergleich von Fig. 3 und Fig. 1 links als $t_{P1} - t_{P0}$ ermittelt und mit der rechts stehenden Summe der einzelnen Wanddicken gleichgesetzt. Hierbei ist die zeitliche Verzögerung des ersten Wandbereichs als

$(t_2 - t_1) \cdot n_1 - (t_2 - t_1) \cdot n_0$, d.h. somit als $(t_2 - t_1) \cdot (n_1 - n_0)$ anzusetzen, entsprechend die zeitliche Verzögerung des zweiten Wandbereichs als
$(t_4 - t_3) \cdot (n_1 - n_0)$.

Hieraus kann GL3b umgeformt werden, woraus dann nach GL3c die Wanddicke WT34 ermittelt werden kann, die somit aus bekannten Größen und Messgrößen, nämlich $t_2$, $t_1$, $t_{P1}$, $t_{P0}$, $n_1$, $n_0$ und $C_0$ berechnet werden kann.
Da im Bereich der Zeitpunkte t1, t2 und t4 ordnungsgemäße Messpeaks vorliegen, kann auch angesetzt werden, welche Grenzfläche nicht detektiert wird, da im Bereich um t3 ein Messpeak erwartet wird und fehlt.
Die Messung nach Figur 3 kann sich zeitlich insbesondere auch an Messungen gemäß Figur 2 anschließen, bei denen das Rohr 18 zunächst ordnungsgemäß war, so dass in der Signalamplitude S der Peak p-t3 wegfällt.
Figur 4 zeigt eine weitere Messung, die sich an eine Kalibriermessung der Figur 1 anschließt. Hier wird als Messobjekt ein mehrkammeriges Profil 28 vermessen, das in der optischen Achse A somit eine Vorderwand 128 und eine Rückwand 228 mit jeweils zwei Grenzflächen 128a und 128b sowie entsprechend 228a und 228b aufweist. Weiterhin weist das Profil 28 einen Zwischensteg 328 auf, der hier schräg bzw. nicht-senkrecht zur optischen Achse ausgerichtet ist und somit den Innenraum des Profils 28 in ungleiche Kammern 27, 29 unterteilt. In der Signalamplitude der Figur 4 können somit zu den Zeitpunkten t1, t2 und entsprechend t5, t6 die Reflexionen an den Grenzflächen des vorderen Stegs 128 und des hinteren Stegs 228 gemessen werden. Beim Durchtritt durch den schräg verlaufenden Steg 328 zu Zeitpunkten t3, t4 werden jedoch keine Messpeaks gemessen. Der Zeitpunkt tp1 der Totalreflexion am Spiegel 3 ist wiederum gegenüber dem Zeitpunkt tp0 der Kalibriermessung verschoben, entsprechend der gesamten zeitlichen Verzögerung durch sämtliche Stege 128, 228 und 328, und zwar entsprechend ihrem Anteil bzw. der Weglänge entlang der optischen Achse A.
Es gilt:

GL4
GL4a:

$$t_{P1} - t_{P0} = (t_2 - t_1) \cdot (n_1 - n_0) + (t_4 - t_3) \cdot (n_1 - n_0) + (t_6 - t_5) \cdot (n_1 - n_0)$$

GL4b:

$$(t_4 - t_3) = (\, (\, t_{P1} - t_{P0}\, ) \,/\, (n_1 - n_0)\, )\, - (t_2 - t_1) - (t_6 - t_5)$$

GL4c:

$$WT_{34} = (t_4 - t_3) \cdot C_0 \,/\, 2\, n_1$$

$$= (\, (\, (\, t_{P1} - t_{P0}\, ) \,/\, (n_1 - n_0)\, )\, - (t_2 - t_1) - (t_6 - t_5)\, )\, \cdot C_0 \,/\, 2\, n_1$$

Auch in Gleichung 4 kann wiederum

- in einem Schritt St4 einer Ermittlung der Schichtdicke bei fehlendem Reflex

die Schichtdicke WT34 durch Einsetzen des Terms (t4-t3) aus Gleichung 4b in die Gleichung 4c ermittelt werden. Somit kann wiederum WT34 aus bekannten Größen und Messgrößen berechnet werden.

Zwar sind in der Ausführungsform der Fig. 4 Ort und Dicke der Strebe bzw. Lamelle 328 nicht bekannt; ihre geometrische Schichtdicke entlang der optischen Achse A kann jedoch ermittelt werden. Die geometrische Lamellendicke d_328 ermittelt sich entsprechend unter Berücksichtigung des geometrischen Winkels $\alpha$ der Strebe gegenüber der optischen Achse A, d. h. mit dem Sinus bzw. Cosinus des Winkels zur optischen Achse A.

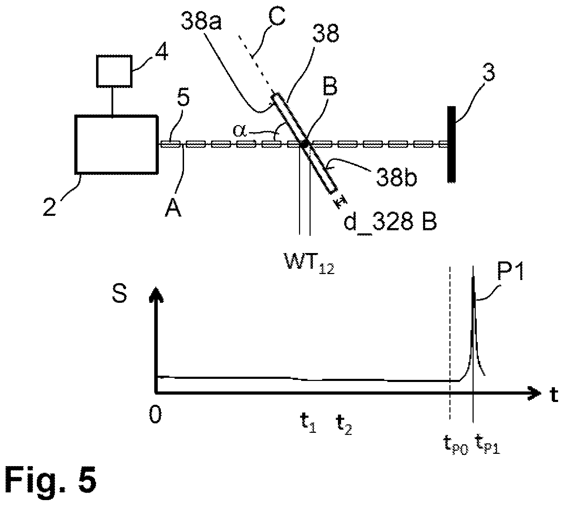

Figur 5 zeigt eine weitere Vermessung, bei der in dem Schritt St2 der Objektvermessung ein Messobjekt 328 vermessen wird, das durch eine schräg zur optischen Achse A stehende Band, Platte oder Strebe gebildet ist und z.B. wiederum im Endlosverfahren hergestellt wird. Gemäß der hier gezeigten Ausführungsform kann es insbesondere planparallel sein, so dass seine Flächen 328a und 328b zueinander parallel und jeweils unter einem nicht-senkrechten Winkel $\alpha$ zur optischen Achse A angeordnet sind; die Breite kann aber auch bei nicht-parallelen Grenzflächen ermittelt werden, der THz-Sendestrahl 5 tritt durch die Grenzflächen 328A, 328b, bei denen jeweils Teil-Reflexionsstrahlen wegreflektiert werden, die nicht zur optischen Achse A zurück reflektiert werden, wobei das Messobjekt 328 hier eine Breite WT12 entlang der optischen Achse A aufweist, in der der Sendestrahl 5 entsprechend zeitlich verzögert wird. Somit ist in der Signalamplitude S gemäß Figur 5 zu den Zeitpunkten t1 und t2, in denen der Sendestrahl 5 durch das Messobjekt 328 tritt, kein Messpeak oder eine relevante Änderung der Signalamplitude S zu detektieren. Es wird lediglich der Zeitpunkt tP1 ermittelt, zu dem der Totalreflexionspeak P1 am Spiegel 3 auftritt, und aus dem die zeitliche Verzögerung tP1-tP0 gegenüber dem Totalreflexionspeak der Leermessung bzw. Kalibriermessung der Figur 1 ermittelt werden kann.

Es gilt:

GL5:
GL5a

$$t_{P1}-t_{P0} = (t_2-t_1) \cdot (n_1-n_0)$$

GL5b

$$(t_2-t_1) = (t_{P1}-t_{P0}) / (n_1-n_0)$$

GL5c

$$WT_{12} = (t_2-t_1) \cdot C_0 / 2\, n_1$$
$$= ((t_{P1}-t_{P0}) / (n_1-n_0)) \cdot C_0 / 2\, n_1$$

sodass wiederum WT12 berechnet werden kann.

Somit kann hier wiederum - in dem Schritt St4 Ermittlung Schichtdicken WTi,j falls ein Reflex fehlt - der Term (t2-t1) direkt aus Gleichung 5b in Gleichung 5c eingesetzt werden, und somit aus den Messdaten der Leermessung nach Figur 1 und der nachfolgenden Vermessung aus Figur 5 die geometrische Schichtdicke WT12 ermittelt werden.

Auch hier ergibt sich die Wanddicke des Messobjekts 38 senkrecht zu seinen Flächen unter Berücksichtigung des geometrischen Winkels $\alpha$ zwischen der optischen Achse A und seiner Symmetrieachse C, d. h. die geometrische Schichtdicke d_328 kann für $\alpha$ ungleich 0 wie folgt ermittelt werden:

$$d\_328 = WT12 * \sin\alpha.$$

Gemäß einer weiteren, vorteilhaften Ausführungsform erfolgt nach der Kalibriermessung des Schrittes St1 nachfolgend und vor dem Schritt St3 der Objektvermessung

- ein optionaler Schritt St2 Ermittlung Brechungsindex n1 d.h. es erfolgt eine Bestimmung der Schichtdicken, ohne dass vorab der Brechungsindex n1 des Materials des Messobjektes 8 bekannt ist bzw. wenn der Brechungsindex n1 gegebenenfalls geändert sein kann.

Falls der Brechungsindex n1 nicht bekannt ist, kann in dem Schritt St2 "Ermittlung Brechungsindex n1" der Brechungsindex n1 aus einem Vergleich mit der Kalibriermessung der Figur 1 bestimmt werden:
In einem Gleichungssystem GL6 kann zunächst wiederum eine Gleichung GL6a entsprechend den obigen Gleichungen GL3a, GL5a angesetzt werden:

GL6a:

$$t_{P1} - t_{P0} = (t_2 - t_1) \cdot (n_1 - n_0) + (t_4 - t_3) \cdot (n_1 - n_0)$$

woraus sich somit bei Auflösung nach n1 ergibt:

GL6b:

$$n_1 = ( (t_{P1} - t_{P0}) / (t_2 - t_1 + t_4 - t_3) ) + n_0$$

tP0 wird in der Kalibriermessung gemessen.
t1, t2, t3, t4, tP1 werden in der Objektmessung gemessen.
Mit n0=1 kann somit n1 ermittelt werden.

Hierbei wird lediglich davon ausgegangen, dass das Messobjekt einen einheitlichen bzw. in den Messstrecken konstanten Brechungsindex n1 aufweist.
Der Schritt St1 der Kalibrierung kann einmalig vor Einführung des Messobjektes 8 durchgeführt und nachfolgend verwendet werden. Somit können in Schritten St2 Materialänderungen während des Prozesses ermittelt werden. Solange sämtliche Grenzflächen direkt gemessen werden können, d.h. nicht der Fall z.B. der Fig. 3, 4 oder 5 vorliegt, kann somit in einem Schritt St2 der Brechungsindex n1 des Messobjektes 8 kontinuierlich bestimmt werden.
Falls somit zwei Materialien gemischt werden, z.B. mit an sich bekannten Brechungsindices n2 und n3, mit n2 ungleich n3, kann aus n1 das Verhältnis der Materialien ermittelt werden.
Somit ergeben sich die Ausführungsformen mit

- in Schritt St1 zunächst die Kalibriermessung,
- im Fall des Vorliegens sämtlicher Messpeaks P-ti optionaler Schritt St2 einer Bestimmung des Brechungsindex n1,
- im Fall des Vorliegens sämtlicher Messpeaks P-ti nachfolgend fortlaufend Schritt St3 Bestimmung der geometrischen Wanddicken WTij,
- im Fall des Fehlens eines oder mehrerer Messpeaks P-ti Schritt St4 der Ermittlung der Schichtdicken WTi,j aus Vergleich mit Gesamt- Zeitverzögerung tP1-tP0.

Bezugszeichenliste:

1       THz-Messvorrichtung
2       THz-Transceiver
3       Reflektor, insbesondere Spiegel oder Totalreflektor
4       Steuer- und Auswerteeinrichtung
5       THz-Sendestrahl
6       Messraum
8       erstes Messobjekt, regelmäßiges Zylinderrohr
8a      Außenfläche des Zylinderrohrs 8
8b      Innenfläche des Zylinderrohrs 8
9       Innenraum des Zylinderrohrs 8
11      Sagging-Bereich in Fig. 3
11a     Innenfläche des Sagging-Bereichs 11
18      zweites Messobjekt, Zylinderrohr mit Sagging in Fig. 3
18a     Außenfläche des zweiten Messobjekts 18
18b     Innenfläche des zweiten Messobjekts 18

| 28 | drittes Messobjekt der Fig. 4 als mehrkammeriges Profil mit Innenleiste |
| 128 | vordere Wand der Fig. 4 |
| 228 | hintere Wand der Fig. 4 |
| 328 | Innenleiste oder Strebe der Fig. 4 |
| 328a, 328b | Grenzflächen der Innenleiste 328 der Fig. 4 |

| 38 | Messobjekt der Figur 5, schrägstehende Leiste oder Schicht |
| 38a, 38b | Grenzflächen des Messobjektes 38 |

| A | optische Achse |
| B | Symmetrieachse der Messobjekte 8, 18, 28, 38 |
| C | geometrische Symmetrieachse des Messobjekts 38 |
| ID | Innendurchmesser |
| n0 | Brechungsindex von Luft n0=1 |
| n1 | Brechungsindex des Materials des Messobjektes 8 |

| OD | Außendurchmesser |
| P0 | Kalibrierungs-Hauptreflexionspeak (Totalreflexionspeak) |
| P1 | Mess-Hauptreflexionspeak (Totalreflexionspeak) |
| P-ti | Messpeak zum Zeitpunkt ti |
| S | Signalamplitude |
| t | Zeit |
| tP0 | Kalibrierungs-Zeitpunkt der Kalibrierungsmessung (Leermessung) |
| tP1 | Hauptreflektions-Zeitpunkt der Objektmessung |
| ti, t1, t2, t3, t4, t5, t6 | Teil-Reflektionszeitpunkte |
| t2-t1 | zeitliche Verzögerung zwischen Zeitpunkten t1 und t2 |
| t4-t3 | zeitliche Verzögerung zwischen den Zeitpunkten t3 und t4 |
| tP1-tP0 | Gesamt- Zeitverzögerung |
| WTij | geometrische Schichtdicke entlang der optischen Achse zwischen den Grenzflächen beim Durchtritt des Sendestrahls 5 zu den Zeitpunkten ti, tj, geometrische Schichtdicken von Wandbereichen oder Luftschichten werden entlang der optischen Achse A ermittelt |

| St1 | Kalibriermessung, Leermessung |
| St2 | optional Ermittlung Brechungsindex n1 |
| St3 | Ermittlung Schichtdicken WTi,j bei ordnungsgemäßer Messung der Fig. 2, d.h. falls alle Messpeaks ermittelt werden |
| St4 | Ermittlung Schichtdicken WTi,j falls ein mindestens ein Messpeak fehlt, z.B. Fig. 3, 4, 5 |

**Patentansprüche**

1. THz-Messverfahren zur Vermessung eines Messobjektes (8, 18, 28, 38),

   mit mindestens folgenden Schritten:

   - Kalibriermessung unter Aussenden eines THz-Sendestrahls (5) durch einen leeren Messraum (6) zu einem Hauptreflektor (3) entlang einer optischen Achse (A), Reflexion des THz-Sendestrahls (5) an dem Hauptreflektor (3) zurück entlang der optischen Achse (A) zu dem THz-Transceiver (5) und Detektion eines Kalibrierungs-Hauptreflexionspeaks (P0) zu einem Kalibrierungs-Zeitpunkt (tP0), (St1)
   - Einbringen eines Messobjektes (8, 18, 28, 38) mit Wandbereichen in den Messraum (6),
   - Objektmessung unter Aussenden des THz-Sendestrahls (5) von dem THz-Transceiver (2) entlang der optischen Achse (A) durch den Messraum (6) und das Messobjekt (8, 18, 28, 38) zu dem Hauptreflektor (3), Reflexion des THz-Sendestrahls (5) zurück entlang der optischen Achse (A) zu dem THz- Transceiver (5) und Detektion eines Mess-Hauptreflexionspeaks (Pt) der Objektmessung zu einem Hauptreflektions-Zeitpunkt (tP1), (St2)
   - Ermittlung einer Gesamt- Zeitverzögerung (tP1-tPO) des Hauptreflektions-Zeitpunktes (tP1) gegenüber dem Kalibrierungs-Zeitpunkt (tP0), (St4)
   - Zuordnung der Gesamt- Zeitverzögerung (tP1-tPO) zu einer Summe der zeitlichen Verzögerungen des THz-Sendestrahls (5) in den Wandbereichen des Messobjektes (8, 18, 28, 38) und Ermittlung von geometrischen Schichtdicken des Messobjektes (St4),

wobei der THz-Sendestrahl (5) durch Grenzflächen (8a, 8b; 18a, 18b; 28a, 28b; 38a, 38b) des Messobjektes (8, 18, 28, 38) unter Erzeugung von Teil-Reflexionsstrahlen tritt und bei seiner Detektion eine Signalamplitude (S) erzeugt mit:

- dem Hauptreflexionspeak (P1) zu dem Hauptreflektions-Zeitpunkt (tP1)
- und Messpeaks (P1, P2, P3, P4. P5, P6) von senkrecht zur optischen Achse stehenden Grenzflächen zu Teilreflektions-Zeitpunkten (t1, t2, t3, t4, t5, t6) (St3),
- wobei geometrische Schichtdicken (WTij) des Messobjektes (8, 18, 28, 38) entlang der optischen Achse (A) aus Zeitdifferenzen der ermittelten Teilreflektions-Zeitpunkte (t1, t2, t3, t4, t5, t6) der Messpeaks (P1, P2, P3, P4. P5, P6) und ihrem Brechungsindex (n0, n1) als Luftschichten und/oder Wandbereiche des Messobjektes (8) von einer Steuer- und Auswerteeinrichtung (4) ermittelt werden, (St3),

**dadurch gekennzeichnet, dass**
in dem Fall, dass zu mindestens einer Grenzfläche (8a; 11a; 328a, 328b; 38a, 38b) kein Messpeak in der Signalamplitude (S) ermittelt wird, eine geometrische Schichtdicke (WT34, WT12) eines Wandbereichs von der Steuer- und Auswerteeinrichtung (4) ermittelt wird durch die Ermittlung der Gesamt- Zeitverzögerung (tP1-tP0) und die Zuordnung der Gesamt- Zeitverzögerung (tP1-tP0) zu der Summe der zeitlichen Verzögerungen in den Wandbereichen (St4).

2. Verfahren nach Anspruch 1, **dadurch gekennzeichnet, dass**
der THz-Sendestrahl (5) durch Grenzflächen (8a, 8b; 18a, 18b; 28a, 28b; 38a, 38b) des Messobjektes (8, 18, 28, 38) unter Erzeugung von Teil- Reflexionspeaks tritt und bei seiner Detektion eine Signalamplitude (S) erzeugt, wobei die Anzahl der Grenzflächen und die Reihenfolge der Teil- Reflexionspeaks der Grenzflächen in der Signalamplitude (S) bekannt ist und bei Fehlen eines Teil- Reflexionspeaks in der Signalamplitude (S) die nicht detektierte Grenzfläche bekannt ist, z.B. als Innenfläche eines Wandbereichs, insbesondere durch einen Vergleich mit vorgespeicherten Daten oder Modell-Daten.

3. Verfahren nach einem der vorherigen Ansprüche, **dadurch gekennzeichnet, dass** der THz-Sendestrahl im Bereich der Terahertz-Strahlung, Mikrowellenstrahlung oder Radarstrahlung,
insbesondere im Frequenzbereich von 10 GHz bis 10 THz, vorzugsweise 30 GHz bis 8 THz, z.B. 50 ober 80 GHz bis 3 oder 5 THz ausgegeben wird, insbesondere vollelektronisch, z.B. mit Laufzeitmessung, Frequenzmodulation und/oder gepulster Strahlung.

4. Verfahren nach einem der vorherigen Ansprüche, **dadurch gekennzeichnet, dass** nach der Kalibriermessung das Messobjekt (8, 18, 28, 38) in dem Messschritt der Objektvermessung fortlaufend entlang einer Achse (B), insbesondere Symmetrierichtung des Messobjektes (8) fortlaufend durch den Messraum (6) und durch die optische Achse (A) gefördert und vermessen wird.

5. Verfahren nach Anspruch 4, **dadurch gekennzeichnet, dass** ein aus einem Vergleich mehrerer, insbesondere aufeinanderfolgender Messungen bei Fehlen oder Wegfall eines der Teil- Reflexionspeaks die relevante Grenzfläche ermittelt wird.

6. Verfahren nach Anspruch 4 oder 5, **dadurch gekennzeichnet, dass** ein Messobjekt (18) nach seiner Herstellung, z.B. Extrusion, fortlaufend durch den Messraum (6) gefördert wird und seine Schichtdicken, insbesondere Luftschichtdicken und Wandbereiche, vermessen werden,
wobei bei Detektion des Fehlens eines Teil- Reflexionspeaks (P_t3) einer Innenfläche eines Wandbereichs ein Sagging erkannt wird.

7. Verfahren nach einem der vorherigen Ansprüche, **dadurch gekennzeichnet, dass**
bei der Ermittlung der Schichtdicke WT34 eines Messobjektes (18) mit einem vorderen Wandbereich, einer Luftschicht und einem hinteren Wandbereich, im Falle einer nicht detektierten Innenfläche (8b) eines der Wandbereiche, insbesondere bei Sagging, folgendes Gleichungssystem GL3 angesetzt wird:

GL3:

GL3a:

$$t_{P1}-t_{P0} = (t_2-t_1) \cdot (n_1-n_0) + (t_4-t_3) \cdot (n_1-n_0)$$

GL3b:

$$(t_4-t_3) = ( ( t_{P1}-t_{P0}) / (n_1-n_0) ) - (t_2-t_1)$$

GL3c:

$$WT_{34} = (t_4-t_3) \cdot C_0 / 2 n_1$$

mit:

$t_{P1}- t_{P0}$ = Gesamt-Zeitverzögerung des Hauptreflektions-Zeitpunktes (tP1) der Objektmessung gegenüber dem Kalibrierungs-Zeitpunkts (tP0) der Kalibriermessung

tP1 Hauptreflektions-Zeitpunkt
tP0 Kalibrierungs-Zeitpunkt
t2-t1 Zeitdifferenz der Teilreflektions-Zeitpunkte t1 und t2
t4-t3 Zeitdifferenz der Teilreflektions-Zeitpunkte t3 und t4

$n_1$= Brechungsindex Material des Messobjektes
$n_0$= Brechungsindex Luftschicht,
$WT_{34}$= zu ermittelnde Schichtdicke,
$C_0$= Lichtgeschwindigkeit im Vakuum

8. Verfahren nach einem der vorherigen Ansprüche, **dadurch gekennzeichnet, dass** eine Schichtdicke eines Wandbereichs (328, 38) zwischen zwei nicht-senkrecht zur optischen Achse (A) stehenden Grenzflächen (328a, 328b; 38a, 38b) ermittelt wird, z.B. einer schrägen Innenleiste (328) eines Profils mit mindestens einer weiteren, senkrecht stehenden Grenzfläche oder einer schrägstehenden Platte oder Schicht (38) ohne weitere Grenzflächen.

9. Verfahren nach Anspruch 8, **dadurch gekennzeichnet, dass** bei der Ermittlung der Schichtdicke WT34 des Messobjektes (18) folgendes Gleichungssystem angesetzt wird:

GL4

GL4a:

$$t_{P1}-t_{P0} = (t_2-t_1) \cdot (n_1-n_0) + (t_4-t_3) \cdot (n_1-n_0) + (t_6-t_5) \cdot (n_1-n_0)$$

GL4b:

$$(t_4-t_3) = ( ( t_{P1}-t_{P0} ) / (n_1-n_0) ) - (t_2-t_1) - (t_6-t_5)$$

GL4c:

$$WT_{34} = (t_4-t_3) \cdot C_0 / 2n_1 = ((( t_{P1}-t_{P0} ) / (n_1-n_0)) - (t_2-t_1) - (t_6-t_5)) \cdot C_0 /2n_1$$

mit

$t_{P1}- t_{P0}$ = Gesamt-Zeitverzögerung des Hauptreflektions-Zeitpunktes (tP1) der Objektmessung gegenüber dem Kalibrierungs-Zeitpunkts (tP0) der Kalibriermessung

tP1 Hauptreflektions-Zeitpunkt
tP0 Kalibrierungs-Zeitpunkt
t2-t1 Zeitdifferenz der Teilreflektions-Zeitpunkte t1 und t2
t4-t3 Zeitdifferenz der Teilreflektions-Zeitpunkte t3 und t4

$n_1$= Brechungsindex Material des Messobjektes
$n_0$= Brechungsindex Luftschicht,
$WT_{34}$= zu ermittelnde Schichtdicke,
$C_0$= Lichtgeschwindigkeit im Vakuum

10. THz-Messverfahren nach einem der vorherigen Ansprüche, **dadurch gekennzeichnet, dass** ein Messobjekt (8, 18, 28, 38) aus einem einheitlichen Material, insbesondere Kunststoff, Gummi, Papiermaterial, Glas oder Keramik, vermessen wird und bei der Ermittlung ein einheitlicher Brechungsindex (n1) des Materials angesetzt wird.

11. THz-Messverfahren nach einem der vorherigen Ansprüche, **dadurch gekennzeichnet, dass** in dem Fall, das sämtliche Teilreflektions-Zeitpunkte (t1, t2, t3, t4, t5, t6) der Messpeaks (P1, P2, P3, P4. P5, P6) in der Signalamplitude (S) ermittelt werden,
eine Ermittlung des Brechungsindex (n1) des Materials des Messobjektes (8) durch einen Vergleich der Objektvermessung mit der Kalibriermessung erfolgt (St2).

12. THz-Messverfahren nach Anspruch 11, **dadurch gekennzeichnet, dass** aus den Teil-Reflektionszeitpunkten (t1, t2, t3, t4) mindestens eine Wand-Laufzeit (t2-t1, t4-t3) des THz-Sendestrahls (5) durch mindestens einen Materialbereich des Messobjektes (8) ermittelt wird, und
eine Laufzeitverzögerung des THz-Sendestrahls (5) durch den mindestens einen Materialbereich oder eine Summe der Laufzeitverzögerungen ( $(t_2-t_1) \cdot (n_1-n_0) + (t_4-t_3) \cdot (n_1-n_0)$ ) durch mehrere Materialbereiche verglichen werden mit einer zeitlichen Verzögerung ($t_{P1}-t_{P0}$) des Hauptreflektions-Zeitpunktes (tP1) gegenüber dem Kalibrierungs-Zeitpunkt (tP0).

13. THz-Messvorrichtung (1) zur Vermessung eines Messobjektes (8, 18, 28, 38), wobei die THz-Messvorrichtung (1) aufweist:

einen THz-Transceiver (2) zum Aussenden eines THz-Sendestrahls (5) entlang einer optischen Achse (A) und Detektieren von entlang der optischen Achse (A) reflektierter THz-Strahlung,
einen Hauptreflektor (3), der senkrecht zur optischen Achse (A) ausgerichtet ist, zum Reflektieren des THz-Sendestrahls (5) zurück entlang der optischen Achse (A) zum THz-Transceiver (2),
wobei zwischen dem THz-Transceiver (2) und dem Hauptreflektor (3) ein Messraum (6) zur Aufnahme eines Messobjektes (8, 18, 28, 38) ausgebildet ist,
eine Steuer- und Auswerteeinrichtung (4) zur Aufnahme einer Signalamplitude (S) des THz-Transceivers (2) und Auswertung des zeitlichen Verlaufs (S(t)) der Signalamplitude (S),
wobei die THz-Messvorrichtung (1) eingerichtet ist, ein Verfahren nach einem der vorherigen Ansprüche durchzuführen.

**Claims**

1. THz measuring method for measuring a measured object (8, 18, 28, 38), comprising at least the following steps:

- calibration measurement with emitting a THz transmission beam (5) through an empty measuring space (6) towards a main reflector (3) along an optical axis (A), reflection of the THz transmission beam (5) at the main reflector (3) along the optical axis (A) back to the THz transceiver (5) and detecting a calibration main reflection peak (PC) at a calibration point in time (tP0), (St1)
- introducing a measured object (8, 18, 28, 38) including wall regions into the measuring space (6),
- object measurement with emitting the THz transmission beam (5) from the THz transceiver (2) along the optical axis (A) through the measuring space (6) and the measured object (8, 18, 28, 38) towards the main reflector (3), reflection of the THz transmission beam (5) along the optical axis (A) back to the THz transceiver (5) and detecting a measuring main reflection peak (Pt) of the object measurement at a main reflection point in time (tP1), (St2)
- determining a total time delay (tP1-tP0) of the main reflection time (tP1) in relation to the calibration time (tP0), (St4)
- allocating the total time delay (tP1-tP0) to a sum of the temporal delays of the THz transmission beam (5) in the wall regions of the measured object (8, 18, 28, 38) and determining geometric layer thicknesses of the measured object (St4),

where the THz transmission beam (5) passes through boundary surfaces (8a, 8b; 18a, 18b; 28a, 28b; 38a, 38b) of the measured object (8, 18, 28, 38) thereby generating partial reflections beams and generating, upon being detected, a signal amplitude (S) with:

- the main reflection peak (P1) at the main reflection time (tP1)
- and measuring peaks (P1, P2, P3, P4. P5, P6) of boundary surfaces oriented perpendicular to the optical axis at partial reflection times (t1, t2, t3, t4, t5, t6) (St3),
- where geometric layer thicknesses (WTij) of the measured object (8, 18, 28, 38) along the optical axis (A) are determined from temporal differences of the determined partial reflection times (t1, t2, t3, t4, t5, t6) of the measuring peaks (P1, P2, P3, P4. P5, P6) and its refraction index (n0, n1) as air gaps and/or wall regions of the measured object (8), (St3)

**characterized in that,**
in the case that in relation to at least one boundary surface (8a; 11a; 328a, 328b; 38a, 38b) no measuring peak in the signal amplitude (S) is determined, a geometric layer thickness (WT34, WT12) of a wall region is determined by determining the total time delay (tP1-tP0) and the allocation of the total time delay (tP1-tP0) to the sum of temporal delays in the wall regions (St4).

2. Method according to claim 1, **characterized in that** the THz transmission beam (5) passes through boundary surfaces (8a, 8b; 18a, 18b; 28a, 28b; 38a, 38b) of the measured object (8, 18, 28, 38) thereby generating partial reflection peaks and generating, upon being detected, a signal amplitude (S), where the number of boundary surfaces and the sequence of the partial reflection peaks of the boundary surfaces in the signal amplitude (S) is known, and, when a partial reflection peak is missing in the signal amplitude (S), the non-detected boundary surface is known, e.g. as interior surface of a wall region, in particular, by virtue of a comparison with pre-stored data or model data.

3. Method according to one of the above claims, **characterized in that** the THz transmission beam is emitted in the band of Terahertz radiation,

microwave radiation or radar radiation,
in particular, in a frequency range between 10 GHz and 10 THz, preferably 30 GHz and 8 THz, e.g., 50 or 80 GHz to 3 or 5 THz, in particular fully electronically, e.g., with a time-of-flight measurement, frequency modulation and/or pulsed radiation.

4. Method according to one of the above claims, **characterized in that,** after the calibration measurement, in the measuring step of object measuring, the measured object (8, 18, 28, 38) is continuously transported and measured along a (B), in particular, symmetry direction of the measured object (8) through the measuring space (6) and through the optical axis (A).

5. Method according to claim 4, **characterized in that,** in the case where one of the partial reflection peaks is missing or gets lost, the relevant boundary surface is determined from a comparison of several, in particular, successive measurements.

6. Method according to claim 4 or 5, **characterized in that,** after being manufactured, e.g., extruded, a measured object (18) is continuously transported through the measuring space (6) and its layer thicknesses, in particular, thicknesses of air gaps and wall regions, are measured, where, in case a missing partial reflection peak (P_t3) of an interior surface of a wall region is detected, a sagging is recognized.

7. Method according to one of the above claims, **characterized in that,** when determining the layer thickness WT34 of a measured object (18) having a front wall region, an air gap, and a rear wall region, in the case where an interior surface (8b) of one of the wall regions remain undetected, in particular, in a case of sagging, the following system of equations GL3 is used:

GL3:

    GL3a:

$$t_{P1}-t_{P0} = (t_2-t_1) \cdot (n_1-n_0) + (t_4-t_3) \cdot (n_1-n_0)$$

    GL3b:

$$(t_4-t_3) = (\,(\,t_{P1}-t_{P0})\,/\,(n_1-n_0)\,) - (t_2-t_1)$$

    GL3c:

$$WT_{34} = (t_4-t_3) \cdot C_0\,/\,2\,n_1$$

where:

$t_{P1}-t_{P0}$ = total time delay of the main reflection time (tP1) of the object measurement in relation to the calibration time (tP0) of the calibration measurement

    tP1 main reflection time
    tP0 calibration time
    t2-t1 time difference of the partial reflection times t1 and t2
    t4-t3 time difference of the partial reflection times t3 and t4

    $n_1$= refraction index of the material of the measured object
    $n_0$= refraction index of the air gap,
    $WT_{34}$= layer thickness to be determined,
    $C_0$= speed of light in a vacuum

8. Method according to one of the above claims, **characterized in that,** a layer thickness of a wall region (328, 38) between two boundary surfaces (328a, 328b; 38a, 38b) oriented not perpendicular to the optical axis (A) is determined, e.g. that of an inclined inner bar (328) of a profile having at least one further, perpendicular boundary surface or an inclined plate or layer (38) without further boundary surfaces.

9. Method according to claim 8, **characterized in that** when determining the layer thickness WT34 of the measured object (18) the following system of equations is used:

    GL4

    GL4a:

$$t_{P1}-t_{P0} = (t_2-t_1) \cdot (n_1-n_0) + (t_4-t_3) \cdot (n_1-n_0) + (t_6-t_5) \cdot (n_1-n_0)$$

    GL4b:

$$(t_4-t_3) = (\,(\,t_{P1}-t_{P0}\,)\,/\,(n_1-n_0)\,) - (t_2-t_1) - (t_6-t_5)$$

    GL4c:

$$WT_{34} = (t_4-t_3) \cdot C_0\,/\,2n_1 = (((\,t_{P1}-t_{P0}\,)\,/\,(n_1-n_0)) - (t_2-t_1) - (t_6-t_5)) \cdot C_0\,/2n_1$$

where

$t_{P1}-t_{P0}$ = total time delay of the main reflection time (tP1) of the object measurement in relation to the calibration time (tP0) of the calibration measurement

tP1 main reflection time
tP0 calibration time
t2-t1 time difference of the partial reflection times t1 and t2
t4-t3 time difference of the partial reflection times t3 and t4

$n_1$ = refraction index of the material of the measured object
$n_0$ = refraction index of the air gap,
$WT_{34}$ = layer thickness to be determined,
$C_0$ = speed of light in a vacuum

10. THz measuring method according to one of the above claims, **characterized in that** a measured object (8, 18, 28, 38) made of a uniform material, in particular plastics, rubber, paper material, glass, or ceramics, is measured, and for the determination a uniform refraction index (n1) of the material is used.

11. THz measuring method according to one of the above claims,

**characterized in that** in the case, that all partial reflection times (t1, t2, t3, t4, t5, t6) of the measuring peaks (P1, P2, P3, P4. P5, P6) in the signal amplitude (S) are determined, a determination of the refraction index (n1) of the material of the measured object (8) is carried out by means of a comparison of the object measurement with the calibration measurement (St2).

12. THz measuring method according to claim 11, **characterized in that** from the partial reflection times (t1, t2, t3, t4) at least one wall time of flight (t2-t1, t4-t3) of the THz transmission beam (5) through at least one material region of the measured object (8) is determined, and a time-of-flight delay of the THz transmission beam (5) through the at least one material region or a sum of the time-of-flight delays ( $(t_2-t_1) \cdot (n_1-n_0) + (t_4-t_3) \cdot (n_1-n_0)$ ) through several material regions are compared with a time delay ($t_{P1}-t_{P0}$) of the main reflection time (tP1) in relation to the calibration time (tP0).

13. THz measuring device (1) for measuring a measured object (8, 18, 28, 38), the THz measuring device (1) comprising:

a THz transceiver (2) for emitting a THz transmission beams (5) along an optical axis (A) and detecting von THz radiation reflected along the optical axis (A),
a main reflector (3), oriented perpendicular to the optical axis (A), for reflecting the THz transmission beam (5) along the optical axis (A) back to the THz transceiver (2),
where a measuring space (6) is formed between the THz transceiver (2) and the main reflector (3) for receiving a measured object (8, 18, 28, 38), a controller and evaluation means (4) for receiving a signal amplitude (S) of the THz transceivers (2) and evaluating the temporal swipe (S(t)) of said signal amplitude (S),
said controller and evaluation means (4) carrying out a method according to one of the above claims.

**Revendications**

1. Procédé de mesure en térahertz destiné à mesurer un objet à mesurer (8, 18, 28, 38) ledit procédé comportant au moins les étapes suivantes :

- mesure de calibrage en émettant un rayon émis térahertzien (5) à travers un espace de mesure vide (6) jusqu'à un réflecteur principal (3) le long d'un axe optique (A), réflexion du rayon émis (5) térahertzien par le réflecteur principal térahertzien (3) qui retourne le long de l'axe optique (A) vers l'émetteur-récepteur (5), et détection d'un pic de réflexion de calibrage principal (P0) à un moment de calibrage (tP0, (St1),
- introduction d'un objet à mesurer (8, 18, 28, 38) avec des parties de paroi dans l'espace de mesure (6),
- mesure de l'objet par émission d'un rayon térahertzien émis (5) depuis l'émetteur-transmetteur térahertzien (2), le long de l'axe optique (A), à travers l'espace de mesure (6) et l'objet à mesurer (8, 18, 28, 38), vers le réflecteur principal (3), réflexion du rayon térahertzien émis (5) qui retourne le long de l'axe optique (A) vers l'émetteur-transmetteur (5) et détection d'un pic de réflexion principal de mesure (Pt) de la mesure de l'objet à un moment de réflexion principal (tP1), (St2),
- détermination d'un temps de propagation total (tP1-tP0) du moment de réflexion principal (tP1) par rapport au moment de calibrage (tP0, (St4),
- affectation du temps de propagation total (tP1-tP0) à une somme des propagations temporelles du rayon térahertzien émis (5) dans les parties de paroi de l'objet à mesurer (8, 18, 28, 38) et détermination d'épaisseurs de couche géométriques de l'objet à mesurer (St4),

le rayon térahertzien émis (5) passant à travers des surfaces limites (8a, 8b, 18a, 18b, 28a, 28b, 38a, 38b) de l'objet à mesurer (8, 18, 28, 38) en générant des rayons de réflexion partielle, et lors de sa détection, une amplitude de signal (S) avec :

- le pic de réflexion principal (P1) au moment principal de réflexion (tP1)
- et des pics de mesure (P1, P2, P3, P4, P5, P6) de surfaces limites perpendiculaires à l'axe optique à des moments de réflexion partielle (t1, t2, t3, t4, t5, t6,) (St3),
- des épaisseurs de couche géométriques (WTij) de l'objet à mesurer (8, 18, 28, 38) le long de l'axe optique (A) étant déterminées par un dispositif de commande et d'évaluation à partir de différences de temps des moments de réflexion partielle (t1, t2, t3, t4, t5, t6) des pics de mesure (P1, P2, P3, P4, P5, P6) et leurs indices de réfraction (n0, n1) comme couches d'air et/ou parties de paroi de l'objet à mesurer (8), (St3),

**caractérisé en ce que**
dans le cas où aucun pic de mesure n'est déterminé dans l'amplitude de signal (S) pour au moins une surface limite (8a, 11a, 328a, 328b, 38a, 38b), une épaisseur de couche géométrique (WT34, WT12) d'une partie de paroi est déterminée par le dispositif de commande et d'évaluation (4) en déterminant le temps de propagation total (tP1-(tP0) et en affectant le temps de propagation total (tP1-tP0) à la somme des temps de propagation dans les parties de paroi (St4).

2. Procédé suivant la revendication 1, **caractérisé en ce que**
le rayon térahertzien émis (5) passe à travers des surfaces limites (8a, 8b, 18a, 18b, 28a, 28b, 38a, 38b) de l'objet à mesurer (8, 18, 28, 38) en générant des pics de réflexion partielle et, lors de sa détection, une amplitude de signal (S), le nombre de surfaces limites et l'ordre de pics de réflexion partielle des surfaces limites dans l'amplitude de signal (S) étant connus et qu'en absence d'un pic de réflexion partielle dans l'amplitude de signal (S) la surface limite non détectée étant connue, par exemple comme surface interne d'une partie de paroi, notamment par l'intermédiaire d'une comparaison avec des données préalablement mémorisées ou des données modèles.

3. Procédé suivant une des revendications précédentes, **caractérisé en ce que** le rayon térahertzien émis est émis dans le domaine du rayonnement térahertzien, le rayonnement micro-onde ou le rayonnement radar, en particulier dans la plage de fréquences de 10 GHz à 10 THz de préférence, de 30 GHz à 8 THz, par exemple de 50 ou 80 GHz jusqu'à 3 ou 5 THz, notamment de manière entièrement électronique, p. ex. avec mesure du temps de propagation, modulation de fréquence et/ou rayonnement pulsé.

4. Procédé suivant une des revendications précédentes, **caractérisé en ce qu'**après la mesure de calibrage, l'objet à mesurer est, à l'étape de la mesure de l'objet (8, 18, 28, 38), convoyé et mesuré continuellement le long d'un axe (B), en particulier dans la direction de symétrie de l'objet à mesurer (8), continuellement à travers l'espace de mesure (6) et à travers l'axe optique (A).

5. Procédé suivant la revendication 4, **caractérisé en ce qu'**en cas d'absence ou de disparition d'un des pics de réflexion, la surface en question est déterminée à partir d'une comparaison de plusieurs mesures, notamment de mesures successives.

6. Procédé suivant la revendication 4 ou 5, **caractérisé en ce qu'**après sa fabrication, par exemple par extrusion, un objet à mesurer (18) est convoyé continuellement à travers l'espace de mesure (6) et ses épaisseurs de couches, notamment ses épaisseurs de couches d'air et parties de parois sont mesurées, un fléchissement étant reconnu en cas de détection d'absence d'un pic de réflexion partielle (P_t3) d'une surface interne d'une partie de paroi.

7. Procédé suivant une des revendications précédentes, **caractérisé en ce que** lors de la détermination de l'épaisseur de couche WT34 d'un objet à mesurer (18) avec une partie de paroi avant, une couche d'air et une partie de paroi arrière, le système d'équations GL3 suivant est utilisé dans le cas d'une surface interne non détectée (8b) d'une des parties de paroi, notamment en cas de fléchissement :
GL3 :

GL3a :

$$t_{P1}-t_{P0} = (t_2-t_1) \cdot (n_1-n_0) + (t_4-t_3) \cdot (n_1-n_0)$$

GL3b :

$$(t_4-t_3) = ((t_{P1}-t_{P0})/ (n_1-n_0)) - (t_2-t_1)$$

GL3c :

$$WT_{34} = (t_4-t_3) \cdot C_0/ 2n_1$$

avec

$t_{P1}-t_{P0}$ = temps de propagation total du moment de réflexion principal (tP1) de la mesure de l'objet par rapport au moment de calibrage (tP0) de la mesure de calibrage

tP1 moment de réflexion principal
tP0 moment de calibrage
t2-t1 différence de temps des moments de réflexion partielle t1 et t2
t4-t3 différence de temps des moments de réflexion partielle t3 et t4
$n_1$= indice de réfraction du matériau de l'objet à mesurer
$n_0$= indice de réfraction de la couche d'air
WT34= épaisseur de couche à déterminer,
$C_0$= vitesse de la lumière dans le vide

8. Procédé suivant une des revendications précédentes, **caractérisé en ce qu'**une épaisseur de couche d'une partie de paroi (328, 38) est déterminée entre deux surfaces limites (328a, 328b, 38a, 38b) non perpendiculaires par rapport à l'axe optique (A), p.ex. une barre interne inclinée (328) d'un profil comportant au moins une autre surface limite perpendiculaire ou une plaque ou couche inclinée sans autres surfaces limites.

9. Procédé suivant la revendication 8, **caractérisé en ce que** le système d'équation suivant est utilisé lors de la détermination de l'épaisseur de couche WT34 de l'objet à mesurer (18) :
GL4

GL4a :

$$t_{P1}-t_{P0} = (t_2-t_1) \cdot (n_1-n_0) + (t_4-t_3) \cdot (n_1-n_0) + (t_6-t_5) \cdot (O_1-n_0)$$

GL4b :

$$(t_4-t_3) = ((t_{P1}-t_{P0})/ (n_1-n_0)) - (t_2-t_1) - (t_6-t_5)$$

GL4c :

$$WT_{34} = (t_4-t_3) \cdot C_0/ 2n_1 =((( t_{P1}-t_{P0})/ (n_1-n_0)) - (t_2-t_1) - (t_6-t_5)) \cdot C_0/2n_1$$

avec :

$t_{P1}-t_{P0}$ = temps de retard total du moment de réflexion principal (tP1) de la mesure de l'objet par rapport au moment de calibrage (tP0) de la mesure de calibrage

tP1 moment de réflexion principal
tP0 moment de calibrage

t2-t1 différence de temps des moments de réflexion partielle t1 et t2
t4-t3 différence de temps des moments de réflexion partielle t3 et t4
$n_1$ indice de réfraction du matériau de l'objet à mesurer
$n_0$ indice de réfraction de la couche d'air,
$WT_{34}$ épaisseur de couche à déterminer,
$C_0$= vitesse de la lumière dans le vide

**10.** Procédé de mesure en térahertz suivant une des revendications précédentes, **caractérisé en ce qu'**un objet à mesurer (8, 18, 28, 38) en un matériau uniforme, en particulier en matière artificielle, caoutchouc, matériau en papier, verre ou céramique est mesuré et lors de la détermination est utilisé un indice de réfraction uniforme (n1) du matériau.

**11.** Procédé de mesure en térahertz suivant une des revendications précédentes, **caractérisé en ce que** dans le cas où tous les moments de réflexion partielle (t1, t2, t3, t4, t5, t6) des pics de mesure (P1, P2, P3, P4, P5, P6) sont déterminés dans l'amplitude de signal (S), une détermination de l'index de réfraction (n1) du matériau de l'objet à mesurer (8) a lieu par comparaison de la mesure de l'objet avec la mesure de calibrage (St2).

**12.** Procédé de mesure en térahertz suivant la revendication 11, **caractérisé en ce qu'**au moins une durée sur paroi (t2-t1, t4-t3) du rayon térahertzien émis (5) à travers au moins une zone de matériau de l'objet à mesurer (8) est déterminée à partir des moments de réflexion partielle (t1, t2, t3, t4), et un délai de propagation du rayon térahertzien émis à travers au moins une zone de matériau ou une somme de délais de propagation $((t_2-t_1) \cdot (n_1-n_0) + (t_4-t_3) \cdot (n_1-n_0)$ à travers plusieurs zones de matériau sont comparés avec un décalage de temps $(t_{P1}-t_{P0})$ du moment de réflexion principal (tP1) par rapport au moment de calibrage (tP0).

**13.** Dispositif de mesure en térahertz (1) pour la mesure d'un objet à mesurer (8, 18, 28, 38), ledit dispositif de mesure en térahertz (1) présentant :

un émetteur-récepteur en térahertz (2) pour émettre un rayon térahertzien (5) le long d'un axe optique (A) et détecter un rayonnement térahertzien réfléchi le long de l'axe optique (A),
un réflecteur principal (3) qui est orienté perpendiculairement à l'axe optique (A) pour réfléchir le rayon térahertzien (5) qui retourne le long de l'axe optique (A) vers l'émetteur-récepteur (2),
un espace de mesure (6) destiné à recevoir un objet à mesurer (8, 18, 28, 38) étant formé entre l'émetteur-récepteur en térahertz (2) et le réflecteur principal (3), un dispositif de commande et d'évaluation (4) destiné à recevoir une amplitude de signal (S) de l'émetteur-récepteur en térahertz (2) et évaluation de l'évolution temporelle (S(t)) de l'amplitude de signal (S),
le dispositif de mesure en térahertz (1) étant conçu pour exécuter un procédé suivant une des revendications précédentes.

**Fig. 1**

**Fig. 2**

1

4

18b    18a    18    11    6    3

5

A    B    9

$WT_{34}$

S

P-t1    P-t2    P-t4    P1

**Fig. 3**

$t_3$

t

$t_1$  $t_2$    $t_4$    $t_{P0}$  $t_{P1}$

1

4

328a    328b

128    328    28    228    6    3

5

A    27    29

$WT_{34}$

S

P-t1    P-t2    P-t5    P-t6    P1

**Fig. 4**

$t_3$  $t_4$

t

$t_1$ $t_2$    $t_5$ $t_6$    $t_{P0}$  $t_{P1}$

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202016008526 U1
- DE 102018124175 A1
- US 2013204577 A1
- EP 3524930 A1
- US 2010280779 A1
- DE 102017125753 A1